# EUROPEAN PATENT APPLICATION

(11) **EP 3 835 781 A1**
(43) Date of publication of application: **16.06.2021**
(21) Application number: 19883727.0
(22) Date of filing: 14.11.2019
(51) Int. Cl.: G01N 29/265, G01N 29/24, B61K 9/10

(54) **TRACK FLAW DETECTION VEHICLE AND PROBE LAYOUT SYSTEM THEREOF**

(30) Priority: 14.11.2018 CN 201811358515
(71) Applicant: Beijing Lead Time Science & Technology Co., Ltd., Beijing 100071 (CN)
(72) Inventor: ZHANG, Yu, Beijing 100071 (CN); WANG, Zhen, Beijing 100071 (CN); ZHAO, Quanke, Beijing 100071 (CN); WANG, Li, Beijing 100071 (CN); GAO, Xiaorong, Beijing 100071 (CN); ZHAO, Bo, Beijing 100071 (CN); ZHANG, Xiang, Beijing 100071 (CN); WANG, Xiaowei, Beijing 100071 (CN); TAN, You, Beijing 100071 (CN); ZHAO, Menglin, Beijing 100071 (CN); TANG, Jihai, Beijing 100071 (CN)
(74) Representative: Frasson, Luca
(86) International application number: PCT/CN2019/118337
(87) International publication number: WO 2020/098732

(57) **Abstract**

A probe layout system of a track flaw detection vehicle, comprising several single-crystal ultrasonic probes (2), several dual-crystal ultrasonic probes (3), and several phased array ultrasonic probes (4) that have adjustable ultrasonic incident angle functions, all of which are provided on a vehicle body (1) and are used for performing flaw detection on ultrasonic waves emitted from a track surface. Also, each of the single-crystal ultrasonic probes (2), dual-crystal ultrasonic probes (3) and phased array ultrasonic probes (4) may be horizontally rotatably distributed on the vehicle body so as to accommodate different types of tracks. Each probe (2, 3, 4) may adjust in real time the deflection angle thereof according to parameters of a current detection track, which greatly improves the overall ultrasonic coverage area and thereby improves the defect detection rate. At the same time, the phased array ultrasonic probes (4) may directly change ultrasonic incident angles by means of parameter configurations thereof, and has high flexibility. Therefore, the overall adaptability of the system to different types of tracks is greatly improved.

## Description

This application claims priority to Chinese Patent Application No. 201811358515.3, titled "TRACK FLAW DETECTION VEHICLE AND PROBE LAYOUT SYSTEM THEREOF", filed on November 14, 2018 with the China Patent Office, which is incorporated herein by reference in its entirety.

### FIELD

The present disclosure relates to the technical field of rail transportation, and in particular to a probe arrangement system of a rail flaw detection vehicle. The present disclosure further relates to a rail flaw detection vehicle including the probe arrangement system.

### BACKGROUND

With the development of transportation technology, a growing number of rail transportation vehicles are widely used.

There are many types of rail transportation vehicles, such as subways, light rails, high-speed trains, tramcars and rail engineering vehicles. The safe operation of the rail transportation vehicle is not only related to itself, but also related to the laying quality of rail.

Rail flaw detection is a basis of railway transportation, and ensuring the good operation state of the rail is an important measure to ensure safety of the railway transportation. In China, a large-scale rail flaw detection vehicle with an operating speed of 80km/h is generally used to detect the rail periodically. The rail flaw detection vehicle is provided with an ultrasonic detection system to detect the rail. The ultrasonic detection system detects flaw of the rail by means of an ultrasonic echo reflected from the flaw of the rail. In the process of performing the rail flaw detection using an ultrasonic probe, a corresponding structure is adopted to ensure that the ultrasonic probe can correctly transmit and receive an ultrasonic wave on the rail.

Currently, a wheel structure is generally used in the rail flaw detection vehicle. That is, a probe is arranged in a probe wheel, and the ultrasonic wave is transmitted and received with a movement of the probe wheel on the rail. However, in the conventional technology, the rail flaw detection vehicle has a poor effect of detecting rail fatigue defects, cracks and the like. This is because that the rail flaw detection vehicle has a quite small ultrasonic detection coverage area on the rail, resulting in a low flaw detection rate. Further, the rail flaw detection vehicle has a low adaptability to different types and shapes of rails, so that the flaw detection effect is good for only a part of shapes and types of rails.

Therefore, how to improve the ultrasonic coverage area of the rail flaw detection, the flaw detection rate, and the adaptability to different types and shapes of rails is a technical problem to be solved by those skilled in the art.

### SUMMARY

A probe arrangement system of a rail flaw detection vehicle is provided in the present disclosure, to improve an ultrasonic coverage area for rail flaw detection, a flaw detection rate, and adaptability for different types of rails. A rail flaw detection vehicle including the probe arrangement system is further provided in the present disclosure.

In order to solve the above technical problem, a probe arrangement system of a rail flaw detection vehicle is provided in the present disclosure. The probe arrangement system includes: single crystal ultrasonic probes, a double crystal ultrasonic probe, and a phased array ultrasonic probe having a function of modifying an ultrasonic incident angle. The single crystal ultrasonic probes, the double crystal ultrasonic probe and the phased array ultrasonic probe each are arranged on a vehicle body and each are used to transmit an ultrasonic wave to a surface of a rail to perform flaw detection on the rail. The single crystal ultrasonic probes, the double crystal ultrasonic probe and the phased array ultrasonic probe each are horizontally rotatably arranged on the vehicle body, to adapt to different types of rails.

Preferably, the number of the single crystal ultrasonic probes arranged on the vehicle body is six, and the numbers of both of the double crystal ultrasonic probe and the phased array ultrasonic probe arranged on the vehicle body are one to five.

Preferably, the phased array ultrasonic probe is arranged at a position that is located at a distance of 78mm to 132mm away from a reference point on the rail, on one side of the reference point. The double crystal ultrasonic probe is arranged at a position that is located at a distance of 288mm to 342mm away from the reference point on the side of the reference point. Two of the single crystal ultrasonic probes are respectively arranged at positions that are respectively located at a distance of 408mm to 462mm and a distance of 528mm to 582mm away from the reference point on the side of the reference point. The other four of the single crystal ultrasonic probes are arranged at positions on the other side of the reference point that are symmetrical relative to positions of the phased array ultrasonic probe, the double crystal ultrasonic probe and the two of the single crystal ultrasonic probes with respect to the reference point.

Preferably, the phased array ultrasonic probe, the double crystal ultrasonic probe and the single crystal ultrasonic probes each are arranged on an inner or outer side of a longitudinal centerline of the rail, with a lateral offset of 0 to 20mm.

Preferably, the single crystal ultrasonic probes, the double crystal ultrasonic probe and the phased array ultrasonic probe each have a horizontal deflection angle of -40degrees to +40degrees.

Preferably, the single crystal ultrasonic probes, the double crystal ultrasonic probe and the phased array ultrasonic probe each are detachably arranged on the vehicle body via a fastener.

A rail flaw detection vehicle is further provided in the present disclosure. The rail flaw detection vehicle includes a vehicle body and the probe arrangement system as described above. The probe arrangement system is arranged on the vehicle body.

The probe arrangement system of a rail flaw detection vehicle provided in the present disclosure mainly includes single crystal ultrasonic probes, a double crystal ultrasonic probe and a phased array ultrasonic probe. The single crystal ultrasonic probes, the double crystal ultrasonic probe and the phased array ultrasonic probe each are arranged on a vehicle body and each are used to transmit an ultrasonic wave to a surface of a rail to perform rail flaw detection on the rail. Further, the single crystal ultrasonic probes, the double crystal ultrasonic probe and the phased array ultrasonic probe each are horizontally rotatably arranged on the vehicle body. That is, an ultrasonic emission direction of each probe can be deflected to the left or the right along a horizontal direction of the rail. In a case that a shape or a type of the rail changes, for example, in a case that a curvature or a width of the rail changes, each probe may modify a deflection angle of the probe according to a shape parameter of a currently detected rail in real time, to greatly improve an overall ultrasonic coverage area, thereby improving a flow detection rate. In addition, the single crystal ultrasonic probe is suitable for detecting a rail with a quite large thickness, while the double crystal ultrasonic probe is suitable for detecting a rail with a quite small thickness. The phased array ultrasonic probe can directly change an ultrasonic incident angle by configuring a parameter of the phased array ultrasonic probe, which has high flexibility for any shapes and types of rails. Therefore, adaptability of the probe arrangement system for different types of rails is greatly improved.

### BRIEF DESCRIPTION OF THE DRAWINGS

In order to more clearly illustrate the technical solutions in the embodiments of the present disclosure or in the conventional technology, drawings to be used in the description of the embodiments or the conventional technology will be described simply in the following. It is apparent that the drawings in the following description only show some embodiments of the disclosure. For those skilled in the art, other drawings can be obtained according to the drawings in the following description without any creative work.
Figure 1 is a schematic diagram showing an overall structure of a probe arrangement system of a rail flaw detection vehicle according to an embodiment of the present disclosure;
Figure 2 is a schematic diagram showing an arrangement of probes shown in Figure 1 for a currently detected rail section in operation;
Figure 3 is a top view of the arrangement of the probes shown in Figure 1 for the currently detected rail section in operation;

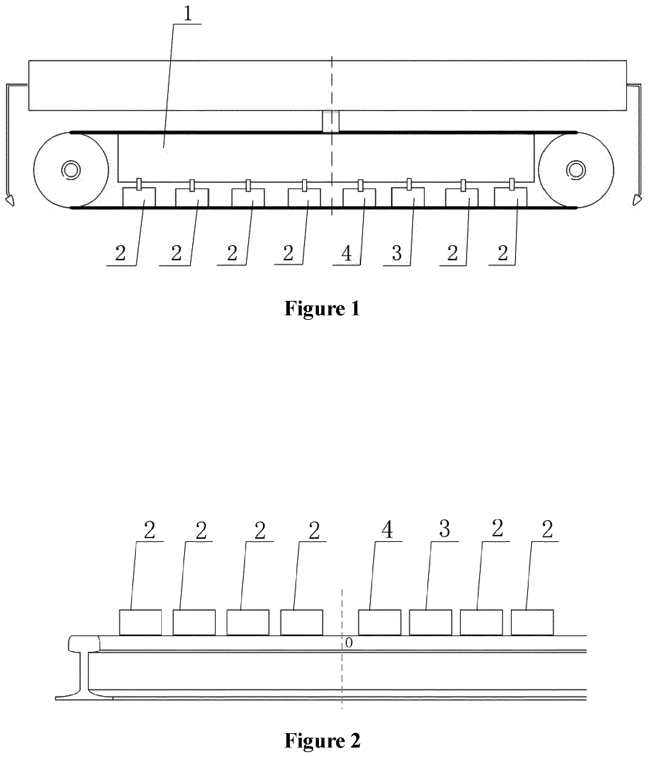

In Figures 1 to 3:

| | | | |
|---|---|---|---|
| vehicle body | 1 | single crystal ultrasonic probe | 2 |
| double crystal ultrasonic probe | 3 | phased array ultrasonic probe | 4 |

### DETAILED DESCRIPTION OF THE EMBODIMENTS

Hereinafter, the technical solutions according to embodiments of the present disclosure are explained clearly and completely in conjunction with the drawings in the embodiments of the disclosure. It is apparent that the embodiments in the following description are only some embodiments of the present disclosure, rather than all of the embodiments. Other embodiments obtained by those skilled in the art based on the embodiments of the present disclosure without any creative work fall into the protection scope of the present disclosure.

Reference is made to Figure 1, which is a schematic diagram showing an overall structure of a probe arrangement system of a rail flaw detection vehicle according to an embodiment of the present disclosure.

In the embodiment of the present disclosure, the probe arrangement system mainly includes single crystal ultrasonic probes 2, a double crystal ultrasonic probe 3 and a phased array ultrasonic probe 4.

The single crystal ultrasonic probes 2, the double crystal ultrasonic probe 3 and the phased array ultrasonic probe 4 each are arranged on a vehicle body 1 and each are used to transmit an ultrasonic wave to a surface of a rail to perform flaw detection on the rail. A location of each probe on the vehicle body 1 may be modified. Preferably, the probe may be arranged at the bottom of the vehicle body 1 to facilitate the detection. Moreover, the single crystal ultrasonic probes 2, the double crystal ultrasonic probe 3 and the phased array ultrasonic probe 4 each are horizontally rotatably arranged on the vehicle body 1. That is, an ultrasonic emission direction of each probe can be deflected to the left or the right along a horizontal direction of the rail. In a case that a shape or a type of the rail changes, for example, in a case that a curvature or a width of the rail changes, each probe may modify a deflection angle of the probe according to a shape parameter of a currently detected rail in real time, to greatly improve an overall ultrasonic coverage area, thereby improving a flow detection rate. In addition, the single crystal ultrasonic probe 2 is suitable for detecting a rail with a quite large thickness, while the double crystal ultrasonic probe 3 is suitable for detecting a rail with a quite small thickness. The phased array ultrasonic probe 4 can directly change an ultrasonic incident angle by configuring a parameter of the phased array ultrasonic probe, which has high flexibility for any shapes and types of rails. Therefore, adaptability of the probe arrangement system for different types of rails is greatly improved.

In a preferred embodiment regarding the numbers of the single crystal ultrasonic probes 2, the double crystal ultrasonic probe 3, and the phased array ultrasonic probe 4, in order to balance the overall ultrasonic coverage area and the production cost of the system, the vehicle body 1 may be provided with one phased array ultrasonic probe 4, one double crystal ultrasonic probe 3, and six single crystal ultrasonic probes 2. The numbers of the three types of ultrasonic probes are not fixed, which may be modified according to a scale of the rail flaw detection vehicle and the actual situation of a to-be-detected rail. For example, the numbers of both of the double crystal ultrasonic probe 3 and the phased array ultrasonic probe 4 may be set as two or five.

Reference is made to Figure 2, which is a schematic diagram showing an arrangement of probes shown in Figure 1 for a currently detected rail section in operation.

The arrangement of the probes may be determined according to a structural size of a conventional flaw detection vehicle and a principle of ultrasonic coverage area maximization. For example, in the case that the numbers of both of the phased array ultrasonic probe 4 and the double crystal ultrasonic probe 3 are one, the phased array ultrasonic probe 4 may be arranged at a position that is located at a distance of 78mm to 132mm away from a reference point (a point O in Figure 2) on a currently detected rail section, on one side of the reference point, such as on the right side of the vehicle body 1. The double crystal ultrasonic probe 3 may be arranged at a position that is located at a distance of 288mm to 342mm away from the reference point on the side of the reference point O. Further, two of the six single crystal ultrasonic probes 2 are arranged on the same side of the vehicle body 1 as the phased array ultrasonic probe 4 and the double crystal ultrasonic probe 3. The two of the single crystal ultrasonic probes are respectively arranged at positions that are respectively located at a distance of 408mm to 462mm and a distance of 528mm to 581mm away from the reference point on the side of the reference point O. The other four of the single crystal ultrasonic probes 2 may be arranged at positions on the other side of the reference point O, such as the left side, that are symmetrical relative to positions of the phased array ultrasonic probe 4, the double crystal ultrasonic probe and 3 the two of the single crystal ultrasonic probes 5 with respect to the reference point.

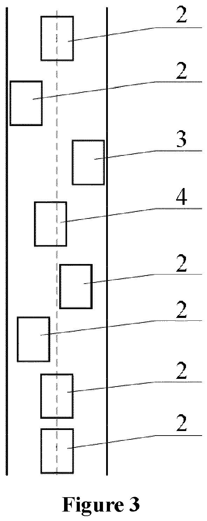

Reference is made to Figure 3, which is a top view of the arrangement of the probes shown in Figure 1 for the currently detected rail section in operation.

Considering shape continuity and extensibility of the rail, the single crystal ultrasonic probes 2, the double crystal ultrasonic probe 3 and the phased array ultrasonic probe 4 provided in the embodiment may be arranged in line on the vehicle body 1, in a direction parallel to a length direction of the vehicle body 1. The arrangement of the single crystal ultrasonic probes 2, the double crystal ultrasonic probe 3 and the phased array ultrasonic probe 4 being arranged in line on the vehicle body 1 is designed only for a special location of some rails. In general, the single crystal ultrasonic probes 2, the double crystal ultrasonic probe 3 and the phased array ultrasonic probe 4 each are arranged on an inner or outer side of a longitudinal centerline of the rail, with a lateral offset of 0 to 20mm.

Further, considering a limit value of the curvature changing of the rail, the single crystal ultrasonic probes 2, the double crystal ultrasonic probe 3 and the phased array ultrasonic probe 4 each have a horizontal deflection angle of -40degrees to +40degrees. That is, with an extension direction of the rail as a reference, the single crystal ultrasonic probes 2, the double crystal ultrasonic probe 3 and the phased array ultrasonic probe 4 each may be deflected to the left or the right by 21 degrees with respect to the extension direction of the rail. Such deflection angle is suitable for most of the rails. The deflection angle may also be appropriately modified based on the actual curvature of the rail.

Moreover, in order to facilitate maintenance and replacement of the probes, the single crystal ultrasonic probes 2, the double crystal ultrasonic probe 3 and the phased array ultrasonic probe 4 each may be arranged on the vehicle body 1 via a fastener, for example, a fastening screw, so that the probe can be easily replaced by removing the fastener.

A rail flaw detection vehicle is further provided according to an embodiment of the present disclosure. The rail flaw detection vehicle mainly includes a vehicle body 1 and a probe arrangement system arranged on the vehicle body 1. The probe arrangement system is the same as that described in the above related description, which is not repeated herein.

According to the above description of the disclosed embodiments, those skilled in the art can implement or practice the present disclosure. Various modifications to these embodiments are apparent for those skilled in the art, and general principles defined herein may be implemented in other embodiments without departing from the spirit or scope of the present disclosure. Hence, the present disclosure is not limited to the embodiments disclosed herein, but conforms to the widest scope in accordance with the principles and novel features disclosed herein.

## Claims

1. A probe arrangement system of a rail flaw detection vehicle, the probe arrangement system comprising:
single crystal ultrasonic probes (2);
a double crystal ultrasonic probe (3); and
a phased array ultrasonic probe (4) having a function of modifying an ultrasonic incident angle, wherein
the single crystal ultrasonic probes (2), the double crystal ultrasonic probe (3) and the phased array ultrasonic probe (4) each are arranged on a vehicle body (1) and each are used to transmit an ultrasonic wave to a surface of a rail to perform flaw detection on the rail; and
the single crystal ultrasonic probes (2), the double crystal ultrasonic probe (3) and the phased array ultrasonic probe (4) each are horizontally rotatably arranged on the vehicle body (1), to adapt to different types of rails.

2. The probe arrangement system according to claim 1, wherein the number of the single crystal ultrasonic probes (2) arranged on the vehicle body (1) is six, and the numbers of both of the double crystal ultrasonic probe (3) and the phased array ultrasonic probe (4) arranged on the vehicle body (1) are one to five.

3. The probe arrangement system according to claim 2, wherein
the phased array ultrasonic probe (4) is arranged at a position that is located at a distance of 78mm to 132mm away from a reference point on the rail, on one side of the reference point;
the double crystal ultrasonic probe (3) is arranged at a position that is located at a distance of 288mm to 342mm away from the reference point on the side of the reference point;
two of the single crystal ultrasonic probes (2) are respectively arranged at positions that are respectively located at a distance of 408mm to 462mm and a distance of 528mm to 582mm away from the reference point on the side of the reference point; and
the other four of the single crystal ultrasonic probes (2) are arranged at positions on the other side of the reference point that are symmetrical relative to positions of the phased array ultrasonic probe, the double crystal ultrasonic probe and the two of the single crystal ultrasonic probes with respect to the reference point.

4. The probe arrangement system according to claim 3, wherein the phased array ultrasonic probe (4), the double crystal ultrasonic probe (3) and the single crystal ultrasonic probes (2) each are arranged on an inner or outer side of a longitudinal centerline of the rail, with a lateral offset of 0 to 20mm.

5. The probe arrangement system according to claim 4, wherein the single crystal ultrasonic probes (2), the double crystal ultrasonic probe (3) and the phased array ultrasonic probe (4) each have a horizontal deflection angle of -40degrees to +40degrees.

6. The probe arrangement system according to claim 5, wherein the single crystal ultrasonic probes (2), the double crystal ultrasonic probe (3) and the phased array ultrasonic probe (4) each are detachably arranged on the vehicle body (1) via a fastener.

7. A rail flaw detection vehicle, comprising:
a vehicle body; and
the probe arrangement system according to any one of claims 1 to 6, wherein
the probe arrangement system is arranged on the vehicle body.
